# EUROPEAN PATENT SPECIFICATION

(11) **EP 1 252 285 B1**
(45) Date of publication and mention of the grant of the patent: **17.03.2004**
(21) Application number: 01906429.4
(22) Date of filing: 01.02.2001
(51) Int. Cl.: C12C 7/04

(54) **PROCESS FOR THE PRODUCTION OF BEER HAVING IMPROVED FLAVOUR STABILITY**
VERFAHREN ZUR HERSTELLUNG VON BIER MIT VERBESSERTER GESCHMACKSTABILITÄT
PROCEDE DE PRODUCTION DE BIERE A STABILITE DE GOUT AMELIOREE

(30) Priority: 01.02.2000 EP 00200338
(43) Date of publication of application: 30.10.2002
(73) Proprietor: QUEST INTERNATIONAL B.V., 1411 GP Naarden (NL)
(72) Inventor: SCHMEDDING, Diederik, Johannes, Maria, NL-1241 CW Kortenhoef (NL); HENNINK, Henk, NL-1216 CT Hilversum (NL); VAN GESTEL, Marinus, Johannes, Martinus, Cornelis, NL-3931 DC Woundenberg (NL); SMITH, Christopher, John, NL-1213 CN Hilversum (NL)
(74) Representative: van Westenbrugge, Andries
(86) International application number: PCT/NL2001/000069
(87) International publication number: WO 2001/057176

(56) References cited:
- WO-A-95/21240
- GB-A- 2 069 527
- US-A- 4 411 914
- CLARKSON S P ET AL: "Oxygen-scavenging enzymes in barley and malt and their effects during mashing." JOURNAL OF THE INSTITUTE OF BREWING 1992 RES. & DEV. DEP., WHITBREAD TECH. CENT., PARK ST., LUTON LU1 3ET, UK, vol. 98, no. 2, pages 111-115, XP000949205
- DATABASE WPI Section Ch, Week 199304 Derwent Publications Ltd., London, GB; Class D13, AN 1993-032613 XP002153600 & JP 04 360684 A (KIKKOMAN CORP), 14 December 1992 (1992-12-14)

## Description

### TECHNOLOGICAL BACKGROUND

The production of beer involves a rather complicated process. In general the process may be outlined in the following way.

### 1. Malting step:

The starting material is barley which is malted, i.e. dampened, germinated and subsequently dried;

### 2. Mashing step:

Then the malt obtained in the malting step is grounded (also called "grist") and mixed with warm water under exposure to enzymatic activity converting starch into sugars and proteins into peptides and aminoacids. The dissolved product from the mashing step is called wort and is separated from the insoluble remainder (mostly husks of the malt) by filtration;

### 3. Wort boiling step:

The wort is boiled with hops and -during boiling- the enzymes are destroyed while bitter substances are extracted from hops. Boiling of the wort also causes a certain amount of protein to coagulate and flocculate and (partial) precipitation of the polyphenols;

### 4. Fermentation step:

After cooling of the wort to about 10°C yeast is added in order to convert the sugar into alcohol and carbon dioxide during fermentation. After fermentation most of the yeast is harvested, remaining the so-called green beer;

### 5. Lagering step:

The green beer according to step 4 containing the remaining yeast cells is stored at a low temperature typically 0°C to 5°C for several weeks. By the end of the lagering there is a sediment in the tank, consisting of yeast cells and precipitated proteins and polyphenols;

### 6. Filtering step:

The beer obtained in step 5 is filtered, for instance on kieselguhr.

### 7. Bottling step:

Finally, the filtered beer is transferred to the bottling or keging machine and stored in bottles.

One of the main aspects in the beer production is dominated by the increasing need for improved levels of flavour stability of the beer.

For instance, in the documents of the EBC Congress 1997, 31, pages 257-266 it is disclosed that a new type of mashing step reducing oxygen uptake does result in a beer having an improved flavour stability. More in particular it is shown therein that the trans-2-nonenal content in packaged beer -considered mainly responsible for the cardboard flavour in beer- is reduced considerably. Above result has been achieved by applying a new system reducing the oxygen uptake during the mashing-in process. According to said system the following three devices can be used:
a) a bottom entry device; the grist is transported from a grist hopper by a horizontal conveyer and falls into the drop pipe. At the end of the drop pipe an intermediate conveyer is installed to reduce the impact caused by the drop and the grist is gently fed into a mixing screw with the brewing liquor. Then the mixture is gently fed from the mixing screw into a mash copper from the bottem;
b) a deaerator for the brewing liquor; by passing the brewing liquor through the deaerator the dissolved oxygen is reduced considerably; and
c) a CO₂ purger; the carbon dioxide purger is installed at the above-mentioned intermediate conveyer's outlet to eliminate oxygen in the grist.

As apparent from the above the new mashing-in system requires a considerable technological adjustment of the conventional mashing-in systems. Therefore, Applicant was seeking for a rather simple solution of the above-defined problem, which solution can be applied in any conventional mashing-in system.

### BRIEF DESCRIPTION OF THE INVENTION

Surprisingly, Applicant has found above-meant solution by adding at least one type of oxygen scavenging enzyme prior to and/or during the mashing stage of the brewing, i.e. step 2 of the above scheme under exclusion of the introduction of external oxygen into the mash. Suitable oxygen scavenging enzymes can be selected from the group consisting of glucose-oxidase (EC 1.1.3.4), hexose oxidase (EC 1.1.3.5), sulfhydryl-oxidase (described in EP 0 565 172), superoxide dismutase (EC 1.15.1.1), tyrosinase and catechol oxidase (both EC 1.10.3.1), peroxidase (EC 1.11.1.7), polyphenyl-oxidases such as laccase (EC 1.10.3.2), and combinations of these enzymes.

In view of the above it is stated that the use of polyphenyloxidase e.g. laccase in the mashing stage of brewing is known from US-A 4,411,914. However, according to the process described in US-A 4,411,914 the cereal origin polyphenyloxidase together with introduced oxygen is used for oxidation of polyphenols present and precipitating the polymers obtained jointly with proteins in presence. Subsequently, the resulting precipitate is removed by filtrating giving a colloidally stable beer at the end of the brewing process. In this respect it is remarked yet that cereal derived enzymes like cereal derived polyphenyloxidases are less thermally stable than microbial enzymes.

A similar process as disclosed in US-A 4,411,914 has also been described in Food Technology, Vol. 3, No. 2,1989, pages 203-213.

Another use of laccase in the brewing process is known from WO 95/21240. However, in the beer-making process according to WO 95/21240 the laccase is added to the fermented beer i.e. after the fermenting stage of the wort.

As apparent from the above, the cited three prior art references have nothing to do with the prevention of forming aldehydes like trans-2-nonenal in the mashing stage of the brewing process. More in particular, the process according to the invention differs from the processes disclosed in US-A-4,411,914 and the above-mentioned Food-article by the exclusion instead of the introduction of external oxygen into the mash. Therefore, the oxygen content of the mash will be diminished very rapidly in the process according to the invention, resulting in a prevention of the forming of aldehydes from unsaturated fatty acids present in the mash.

According to WO 95/21240 the laccase is added after the fermentation step in the brewing, i.e. after step 4 of the above-mentioned scheme, whereas the laccase used in the process according to the invention is introduced in the mashing step, i.e. step 2 of said scheme. Subsequently, the laccase introduced in step 2 will be destroyed in the wort-boiling step, i.e. step 3 of the above-mentioned scheme.

### DETAILED DESCRIPTION OF THE INVENTION

According to the invention microbial laccase (EC 1.10.3.2) is preferred because it may be dosed very precisely. The microbial laccase may be derived from bacteria or fungi including filamentous fungi and yeasts in a way generally known in the art. The microbial laccase is preferably obtained from a fungus, most preferably of an edible source.

Some preferred fungi include strains belonging to the subdivision *Basidiomycotina* and to the subdivision *Ascomycotina.* Suitable examples include a laccase derivable from a strain of *Aspergillus, Neurospora*, e.g. *N.crassa, Podospora, Botrytis, Collybia, Fomes, Lentinus, Pleurotus, Trametes,* e.g. *T.villosa* and *T.versicolor, Rhizoctonia*, e.g. *R.solani, Coprinus,* e.g. *C.plicatilis* and *C.cinereus, Psatyrella, Myceliophthora,* e.g. *M.thermophila, Schytalidium,* e.g. *S.thermophilum, Polyporus,* e.g. *P.pinsitus, Phlebia,* e.g. *P.radita* (WO 92/01046), *Coriolus,* e.g. *C.hirsutus* (JP 2-238885), *Hygrophoropsis, Agaricus, Vascellum, Crucibulum, Myrothecium,* or *Sporormiella*. In particular laccases derivable from *T. villosa, T. versicolor* or *M thermophila* are preferred. Most preferably the laccase is produced from *Pleurotus ostreatus*, the oyster mushroom which is an edible source.

The above-mentioned enzymes to be used in the process according to the invention do not need the addition of any added substrates as these substrates are already present in the malt grist. Of course, other types of oxygen scavenging enzymes selected from the group consisting of enzyme/substrate combinations like galactose-oxidase (EC 1.1.3.9)/galactose can be used in the process according to the invention.

Next to the use of an oxygen scavenging enzyme per se it is also possible to use a combination of such an oxygen scavenging enzyme with another type of enzyme which for instance removes the excreted product of the oxygen scavenging enzyme like H₂O₂. In this respect a combination of glucose-oxidase (EC 1.1.3.4) excreting the product H₂O₂ and catalase (EC 1.11.1.6) using as its substrate H₂O₂ is suitable. Another suitable combination is hexose-oxidase and catalase.

Also other type of enzyme combinations are possible like the combination of laccase with tannase (EC 3.1.1.20); this last enzyme tannase provides a reduction of the tannoid level resulting in an increase in colloidal storage stability of beer.

According to the invention the oxygen scavenging enzyme such as laccase is added prior to and/or during the mashing stage and preferably added immediately prior to the mashing stage. The enzyme or enzymes involved are suitably added to the mixture of malt and water. The mashing step usually starts at moderate temperatures e.g. about 50 °C and ends at an elevated temperature of approximately 80°C. The mashing step takes approximately 1-2 hours, preferably about 1.5 hour. The pH of the mash is generally in the range of 5-7, preferably about 6 and most preferably 5.6.

The amount of the added oxygen scavenging enzyme depends on the type of enzyme and may vary between broad limits, dependant on the desired end concentration of the oxygen of the mash at the end of the mashing step. In the case of laccase, preferably derived from *Pleurotus ostreatus* the amount is in the range of 10-20,000 Units/hl mash, preferably 50-10,000 U/hl mash and most preferably 100-9,000 U/hl mash. The activity (U) of the laccase is assayed with the syringaldazine test as described in EP 0 760 213.

### EXPERIMENTAL

### a) Procedure

Trials were done on 1 hl scale at a pilot brewing facility at TNO-Zeist, the Netherlands. Three test brews using good lager malt (Alexis '96) were made: a control, a treatment at 300 U/hl mash and a treatment at 3000 U/hl mash. The brews were performed under high gravity brewing regime (16 Plato¹ with 70% malt plus 30% maize syrup). Furthermore no other processing aids like other enzymes, finings or colloidal stabilisers were used.

In the tests done to monitor the oxygen consumption rate during mashing, the mashing water was first saturated with air. After saturation. the grist (made of Simpson® malt high SN (= Soluble Nitrogen) marketed by Simpson Ltd.) and the enzyme were added. The laccase sample used excreted by *Proteus ostreatus* consisted of ca 100 U/ml.

### b) Results

### Colour

In table 1 below are some data from colour measurements of the wort and the beer from the test brews.

**Table 1**

| **Wort and beer colour** | | | |
|---|---|---|---|
| Sample | before boil (EBC)* | post boil (EBC) | final beer (EBC) |
| Control | 4.4 | 7.2 | 4.9 |
| 300 U/hl mash | 4.4 | 7.8 | 4.9 |
| 3000 U/hl mash | 5.3 | 8.8 | 5.1 |

| | | | |
|---|---|---|---|
| * EBC = Analytica-EBC 4th Ed. Brauerei und Getränke Rundschau Zürich, Analysis Committee of EBC 1989. | | | |

From this table it can be seen that some colour is generated during (initial stages of) wort boiling, but little or none is recovered in the final beer.

### Beer characteristics

In the table below are some typical data from the fresh beer. Haze measurements were done of the beer at 2°C using a Sigrist-apparatus at 90° angle and is expressed in EBC-units.

**Table 2**

| **Beer characteristics** | | | | | |
|---|---|---|---|---|---|
| Sample | Colour (EBC) | pH | NIBEM* (sec) | Haze (EBC) | SASPL** (ml/100ml) |
| Control | 4.9 | 4.29 | 244 | 0.31 | 13.1 |
| 300 U/hl mash | 4.9 | 4.27 | 246 | 0.30 | 13.8 |
| 3000 U/hl mash | 5.1 | 4,37 | 244 | 0.32 | 13.8 |

| | | | | | |
|---|---|---|---|---|---|
| * NIBEM = foam stability tester (ex. Haffmans B.V.,Venlo, the Netherlands). | | | | | |
| ** SASPL = saturated ammonium sulphate precipitation limit (Tannometer, Fa. Pfeuffer, Kitzingen, Germany = predictive test for colloidal stability). | | | | | |

From table 2, it can be seen that all indicated parameters of the fresh beer are similar.

### Oxygen scavenging during mashing

Tests were performed to monitor the oxygen levels during mashing at 50°C. The oxygen content in mg/l was measured using the "Applicon"® apparatus. Although these tests were performed at 50°C, laccase showed thermostability. Even after 15 minutes at 75°C there was still detectable activity as can be seen from Table 3.

**Table 3**

| **(Residual) laccase (source *Pleurotus ostreatus*) activity during mashing** | | | |
|---|---|---|---|
| | t (min) | Mash T (°C) | Activity Enzyme |
| 1. | 0 | 50 | 100% |
| 2. | 15 | 50 | 76% |
| 3. | 30 | 65 | 61% |
| 4. | 45 | 65 | 54% |
| 5. | 55 | 75 | 60% |
| 6. | 70 | 75 | 59% |

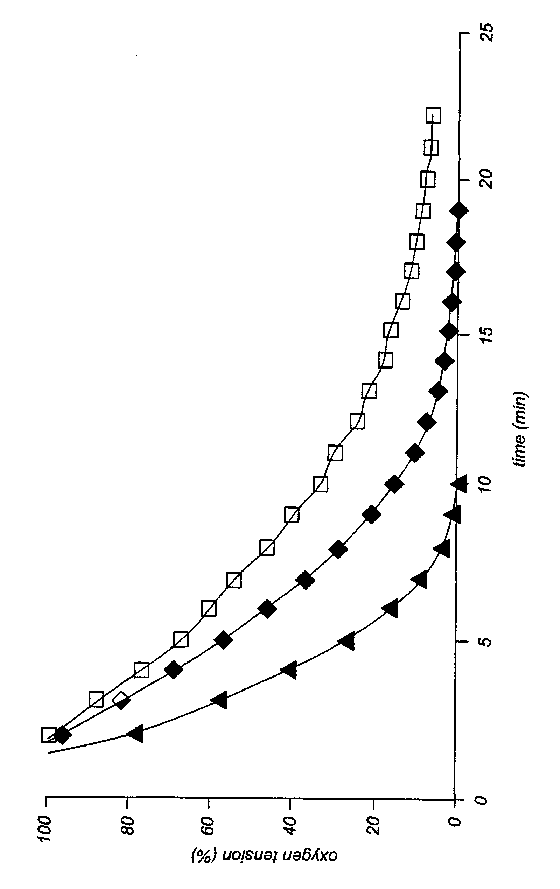

This residual laccase activity may be advantageous to protect the system against oxygen during mash filtration and transfer to the wort kettle. In Figure 1 showing the results from this trial (based on duplicate measurements) the following symbols are used:
- □ - control
- ■ - 3000 U/hl mash
- ▲ - 9000 U/hl mash

From Figure 1 it is deducible that the dissolved oxygen tension drops more rapidly than the control and to much lower levels when laccase is added to the mash.

### Organoleptic tests

Duo-Trio tests were performed on fresh control beer and beer treated with 3000 U/hl mash by the Sensory Research Department. By comparing the fresh control beer and the "treated" beer it revealed that the "treated" beer had an improved mouth feel. After natural and forced ageing of the beer samples it appeared that the "treated" beer had an improved flavour stability.
For supporting the above statements the following tests were carried out with the experimental above-described brew batches, i.e. the control batch and the batch containing the beer "treated" with laccase enzyme added during the mashing process (3000 U/hl mash).

In this respect it is reported that aged beer typically suffers from decreased bitterness, hoppyness, dryness and decreased sulfury, fresh-fruity and floral character while at the same time its body, stewed fruit, sherry, nutty, sweetness and cardboard (trans-2-nonenal) characteristics do increase.

The flavour quality of the beer was tested in various duo-trio tests by both the external sensory panel and the internal beer specialists panel. General instruction to the panellists was:
a) Choose the sample that matches the reference sample
b) Describe the odd sample.

### A summary of all results is given below:

### Session 1: Evaluation of fresh beer

- beer control - 2 weeks at 5°C storage
- beer with laccase treatment - 2 weeks at 5°C storage
Result: not significant (p = 0.0717)
This indicates that the fresh beers are organoleptically the same, which is the aim of the brewer.

### Session 2: Evaluation of forced aged beer

- beer control - 14 days stored at 40°C
- beer with laccase treatment - 14 days stored at 40°C.
Result: significant (p = 0.0195).
This indicates that the forced aged beers are organoleptically different from each other.

Descriptions of laccase-treated beer from panellists with correct identifications: bitter (1x), more bitter (1x), dry (1x), drying after palate (1x), most fresh taste (3x), fresh (1x), hop (1x), sulphury aroma (2x), more thin (= less body) (2x). These identifications are considered advantageous by a brewer in regard of the control beer.

### Session 3: Evaluation of natural aged beer

- beer control - 13 weeks and 2 days natural aging at room temperature (20°C)
- beer with laccase treatment - 13 weeks and 2 days natural aging at room temperature(20°C)
Result: significant (p = 0.0096).
This indicates that these natural aged beers are organoleptically different from each other.

Descriptions of laccase-treated beer from panellists with correct identifications: bitter (3x), dry bitter aftertaste (1x), honey (1x), hop (2x), less full (= less body) (1x). These identifications are considered advantageous by a brewer in regard of the control beer.

### Session 4: Evaluation of natural aged beer

- beer control - 6 months natural aging at room temperature (20°C)
- beer with laccase treatment - 6 months natural aging at room temperature (20°C).
Result: significant (p = 0.0154).
This indicates that these natural aged beers are organoleptically different from each other.

Descriptions of laccase-treated beer from panellists with correct identifications: more bitter (2x), more flowery (2x), fresher taste (1x), less sherry (1x), less sweet (2x). These identifications are considered advantageous by a brewer in regard of the control beer.

## Claims

1. A process for producing beer having improved flavour stability which comprises adding an oxygen scavenging enzyme prior to and/or during the mashing stage of the brewing under exclusion of the introduction of external oxygen into the mash.

2. A process according to claim 1, wherein the oxygen scavenging enzyme is selected from the group consisting of glucose-oxidase (EC 1.1.3.4), hexose-oxidase (EC 1.1.3.5), sulfhydryl-oxidase, superoxide dismutase (EC 1.15.1.1), tyrosinase and catechol oxidase (both EC 1.10.3.1), peroxidase (EC 1.11.1.7), polyphenyloxidases such as laccase (EC 1.10.3.2) and combinations thereof.

3. The process according to claim 1 or 2, wherein the oxygen scavenging enzyme is selected from the group consisting of enzyme/substrate-combinations like galactose-oxidase (EC 1.1.3.9)/galactose.

4. The process according to any of claims 1-3, wherein the oxygen scavenging enzyme is combined with another type of enzyme, like the combination made of laccase and tannase (EC 3.1.1.20) or the combination made of glucose-oxidase and catalase (EC 1.11.1.6) or hexose-oxidase and catalase.

5. The process according to any of the claims 1-4, wherein the laccase is a microbial laccase derived from a strain selected from the group consisting of *Aspergillus, Neurospora, Podospora, Botrytis, Collybia, Fomes, Lentinus, Pleurotus, Trametes, Rhizoctonia, Coprinus, Psatyrella, Myceliophthora, Schytalidium, Polyporus, Phlebia, Coriolus, Hydrophoropsis, Agaricus, Vascellum, Crucibulum, Myrothecium* or *Sporormiella*.

6. The process according to any of the claims 1-5, wherein the microbial laccase has been derived from a strain selected from the group consisting of *T. Villosa*, *T. versicolor* or *M thermophila*.

7. The process according to any of the claims 1-5, wherein the laccase is derived from *Pleurotus ostreatus*.

8. The process according to any of the claims 1-7, wherein the laccase is added in an amount ranging from 10 - 20.000 U/hl mash, preferably 50-10.000 U/hl mash.

9. The beer product obtained by means of the process according to any of the claims 1-8.

## Patentansprüche

1. Verfahren zur Herstellung von Bier mit verbesserter Geschmacksstabilität, welches das Zugeben eines Sauerstoff-abfangenden Enzyms vor und/oder während der Maischephase beim Brauen umfasst, unter Ausschluss des Einleitens von externem Sauerstoff in die Maische.

2. Verfahren nach Anspruch 1, worin das Sauerstoff-abfangende Enzym ausgewählt ist aus der Gruppe, bestehend aus Glukoseoxidase (EC 1.1.3.4), Hexoseoxidase (EC 1.1.3.5), Sulfhydryloxidase, Superoxiddismutase (EC 1.15.1.1), Diphenoloxidase und Catecholoxidase (beide EC 1.10.3.1), Peroxidase (EC 1.11.1.7), Polyphenyloxidasen wie Laccase (EC 1.10.3.2) und Kombinationen hiervon.

3. Verfahren nach Anspruch 1 oder 2, worin das Sauerstoff-abfangende Enzym ausgewählt ist aus der Gruppe bestehend aus Enzym/Substrat-Kombinationen wie Galactoseoxidase (EC 1.1.3.9) /Galactose.

4. Verfahren nach einem der Ansprüche 1 bis 3, worin das Sauerstoff-abfangende Enzym mit einer anderen Enzymart kombiniert ist, wie der Kombination aus Laccase und Tannase (EC 3.1.1.20) oder der Kombination aus Glucoseoxidase und Katalase (EC 1.11.1.6) oder Hexoseoxidase und Katalase.

5. Verfahren nach einem der Ansprüche 1 bis 4, worin die Laccase eine mikrobielle Laccase ist, die von einem Stamm abgeleitet ist, welcher ausgewählt ist aus der Gruppe bestehend aus *Aspergillus, Neurospora, Podospora, Botrytis, Collybia, Fomes, Lentinus, Pleurotus, Trametes, Rhizoctonia, Coprinus, Psa* *tyrella, Myceliophthora, Schytalidium, Polyporus, Phlebia,* Coriolus, *Hydrophoropsis, Agaricus, Vascellum, Crucibulum, Myrothecium* oder *Sporormiella.*

6. Verfahren nach einem der Ansprüche 1 bis 5, worin die mikrobielle Laccase von einem Stamm abgeleitet ist, welcher ausgewählt ist aus der Gruppe bestehend aus *T. villosa, T. versicolor* oder *M. thermophila*.

7. Verfahren nach einem der Ansprüche 1 bis 5, worin die Laccase von *Pleurotus ostreatus* abgeleitet ist.

8. Verfahren nach einem der Ansprüche 1 bis 7, worin die Laccase in einer Menge im Bereich von 10 - 20.000 E/hl Maische, vorzugsweise von 50 - 10.000 E/hl Maische zugefügt ist.

9. Bierprodukt, erhalten durch das Verfahren nach einem der Ansprüche 1 bis 8.

## Revendications

1. Procédé de fabrication de bière possédant une stabilité d'arôme améliorée qui comprend l'addition d'une enzyme absorbant l'oxygène avant et/ou pendant l'étape d'empâtage du brassage, avec absence d'introduction d'oxygène externe dans la maische.

2. Procédé selon la revendication 1, dans lequel l'enzyme absorbant l'oxygène est choisie dans le groupe constitué par une glucose-oxydase (EC 1.1.3.4), une hexose-oxydase (EC 1.1.3.5), une sulfhydryl-oxydase, une superoxyde dismutase (EC 1.15.1.1), une tyrosinase et une catéchol-oxydase (les deux EC 1.10.3.1), une péroxydase (EC 1.11.1.7), des polyphényloxydases comme une laccase (EC 1.10.3.2) et des combinaisons de celles-ci.

3. Procédé selon la revendication 1 ou 2, dans lequel l'enzyme absorbant l'oxygène est choisie dans le groupe constitué par des combinaisons enzyme/substrat comme une galactose-oxydase (EC 1.1.3.9)/galactose.

4. Procédé selon l'une quelconque des revendications 1 à 3, dans lequel l'enzyme absorbant l'oxygène est combinée à un autre type d'enzyme, comme la combinaison laccase et tannase (EC 1.1.1.20) ou la combinaison glucose-oxydase et catalase (EC 1.11.1.6) ou hexose-oxydase et catalase.

5. Procédé selon l'une quelconque des revendications 1 à 4, dans lequel la laccase est une laccase microbienne provenant d'une souche choisie dans le groupe constitué par *Aspergillus, Neurospora, Podospora, Botrytis, Collybia, Fomes, Lentinus,* Pleurotus, *Trametes, Rhizoctonia, Coprinus, Psatyrella, Myceliophthora, Schytalidium, Polyporus, Phlebia, Coriolus, Hygrophoropsis, Agaricus, Vascellum, Crucibulum, Myrothecium* ou *Sporormiella.*

6. Procédé selon l'une quelconque des revendications 1 à 5, dans lequel la laccase microbienne a été obtenue à partir d'une souche choisie dans le groupe constitué par *T*. *villosa, T. versicolor ou M. thermophila*.

7. Procédé selon l'une quelconque des revendications 1 à 5, dans lequel la laccase provient de *Pleurotus ostreatus*.

8. Procédé selon l'une quelconque des revendications 1 à 7, dans lequel la laccase est ajoutée dans une quantité située dans une plage de maische de 10 à 20 000 U/hl, de préférence dans la plage de maische de 50 à 10 000 U/hl.

9. Bière obtenue par le procédé selon l'une quelconque des revendications 1 à 8.
